# EUROPÄISCHE PATENTSCHRIFT

(11) **EP 1 799 510 B1**
(45) Veröffentlichungstag und Bekanntmachung des Hinweises auf die Patenterteilung: **02.01.2008**
(21) Anmeldenummer: 05797473.5
(22) Anmeldetag: 12.10.2005
(51) Int. Cl.: B60R 5/00, B64D 11/00, E05F 1/10

(54) **KRAFTUNTERSTÜTZUNGSVORRICHTUNG MIT LASTABHÄNGIGER KRAFTUNTERSTÜTZUNG**
FORCE SUPPORTING DEVICE WITH A LOAD-DEPENDENT FORCE SUPPORT
SYSTEME D'ASSISTANCE DE FORCE, A ASSISTANCE DE FORCE ASSERVIE A LA CHARGE

(30) Priorität: 12.10.2004 DE 102004049700
(43) Veröffentlichungstag der Anmeldung: 27.06.2007
(73) Patentinhaber: Airbus Deutschland GmbH, 21129 Hamburg (DE)
(72) Erfinder: STEINBECK, Herbert, 21149 Hamburg (DE); GRAF, Oleg, 89257 Illertissen (DE)
(74) Vertreter: Beyer, Andreas
(86) Internationale Anmeldenummer: PCT/EP2005/010968
(87) Internationale Veröffentlichungsnummer: WO 2006/040140

(56) Entgegenhaltungen:
- DE-A1- 4 130 644

## Beschreibung

Die Erfindung betrifft eine Kraftunterstützungsvorrichtung zur Bereitstellung einer lastabhängigen Unterstützungskraft. Insbesondere betrifft die Erfindung eine solche Kraftunterstützungsvorrichtung zur Verwendung in Verbindung mit einem absenkbaren Überkopf-Gepäckfach in einem Passagierflugzeug.

Absenkbare Überkopf-Gepäckfächer in Flugzeugen sind bekannt. So beschreibt z.B. die DE 41 30 644 C2 ein absenkbares Überkopf-Gepäckfach eines Passagierflugzeuges mit Führungssystemen in Form von Gelenkvierecken an jeder Seitenwand des Gepäckfaches und einer Gasdruckfeder für jedes Führungssystem, die entsprechend dem Gewicht des Gepäckfaches eine Unterstützungskraft zum Hochschwenken des Gepäckfachs liefert. Eine Verstelleinrichtung erfasst während des Beladens das Gewicht des Gepäckfachs und wirkt über eine Verstellverbindung auf den Kraftangriffspunkt der Gasdruckfeder ein, um eine dem jeweiligen Beladegewicht des Gepäckfaches entsprechende Einstellung zu erzielen.

Aus der DE 43 35 151 C2 ist ein absenkbares Überkopf-Gepäckfach bekannt, welches ebenfalls an seinen beiden Seitenwänden je ein Führungssystem mit einer zugeordneten Gasfeder aufweist. Die Gasfeder steht mit einer Unterstützungseinrichtung in Wirkverbindung, die eine dem Gewicht des Gepäckfaches angepasste Unterstützungskraft für das Hochschwenken des Gepäckfachs bereitstellt. Eine Blockiereinrichtung ermöglicht eine Verriegelung der Unterstützungseinrichtung.

Die DE 44 46 772 C1 schließlich beschreibt eine Vorrichtung zum Führen eines absenkbaren Überkopf-Gepäckfaches mit zwei beidseitig an den Seitenwänden des Gepäckfaches angeordneten Gelenkvierecken und einem Federsystem je Gelenkviereck zur Unterstützung der Hochschwenkbewegung des Gepäckfaches. Eine innerhalb des Gepäckfaches angeordnete Waageplatte wirkt auf unterhalb der Waageplatte angeordnete Druckgeber, die ihrerseits über mindestens eine Verstellverbindung mit einem Verstellzylinder verbunden sind, der auf eine Verstelleinrichtung zum Verschieben des Kraftangriffspunktes des Federsystems einwirkt, um ihn in Abhängigkeit vom Gewicht des Gepäckfachs zu verschieben, so dass ein dem Lastmoment, das aus dem Gewicht des Gepäckfachs resultiert, angepasstes entgegenwirkendes Drehmoment bereitgestellt wird.

Grundsätzlich besteht bei einem absenkbaren Überkopf-Gepäckfach der Wunsch, dass die zum Öffnen und Schließen des Gepäckfaches erforderlichen Handkräfte unabhängig vom Beladungszustand des Gepäckfachs zumindest in etwa gleich bleiben und werte aufweisen, die auch von einer schwächeren Person noch ohne weiteres aufgebracht werden können. Die aus dem Stand der Technik bekannten, diesem Zweck dienenden Vorrichtungen sind relativ kompliziert aufgebaut und damit potentiell störanfällig.

Der Erfindung liegt die Aufgabe zugrunde, eine verbesserte Vorrichtung anzugeben, die unter anderem dazu geeignet ist, in Verbindung mit einem absenkbaren Überkopf-Gepäckfach eines Flugzeuges eine vom Beladungszustand des Gepäckfaches abhängige Unterstützungskraft bereitzustellen.

Diese Aufgabe ist erfindungsgemäß mit einer Kraftunterstützungsvorrichtung gelöst, die die im Patentanspruch 1 angegebenen Merkmale aufweist. Die erfindungsgemäße Kraftunterstütrungsvorrichtung ermöglicht eine rein mechanische Kontrolle einer Kraftunterstütrung ohne die Notwendigkeit elektrischer oder elektronischer Bauelemente oder Stellglieder. Gemäß einer Alternative können allerdings bei der Verstelleinrichtung und der Lastermittlungseinrichtung der erfindungsgemäßen Kraftunterstütrungsvorrichtung elektrische und elektronische Bauelemente zum Einsatz kommen. Die erfindungsgemäße Kraftunterstütrungsvorrichtung ist kompakt, in ihren wesentlichen Bestandteilen mechanisch aufgebaut und daher stromunabhängig zuverlässig betreibbar sowie darüber hinaus leicht, was sie besonders für einen Einsatz in Flugzeugen prädestiniert. Der Platzbedarf der erfindungsgemäßen Kraftunterstützungsvorrichtung wird im Wesentlichen bestimmt durch den Schwenkbereich ihres Tragarmes und den Schwenkbereich des Schwinghebels. Wird die erfindungsgemäße Kraftunterstützungsvorrichtung beispielsweise zusammen mit einem absenkbaren Überkopf-Gepäckfach in einem Flugzeug eingesetzt, so beträgt gemäß einer Ausführungsform der Schwenkbereich des Schwinghebels ca. 45 Grad. Es versteht sich jedoch, dass kleinere oder größere Schwenkbereiche vorgesehen werden können, wenn dies für einen bestimmten Einsatzfall erforderlich ist oder vorteilhaft erscheint. Ebenso können falls erforderlich und/oder vorteilhaft mehrere erfindungsgemäße Kraftunterstützungsvorrichtungen zusammen mit einem Gegenstand eingesetzt werden, auf den eine Unterstützungskraft aufgebracht werden soll. Im Fall eines absenkbaren Überkopf-Gepäckfaches eines Flugzeuges werden üblicherweise zwei erfindungsgemäße Kraftunterstütrungsvorrichtungen Verwendung finden. Die erfindungsgemäße Kraftunterstützungsvorrichtung wird mit dem einen Ende ihres Tragarmes an einer beliebigen Tragstruktur schwenkbar befestigt, während das andere Ende des Tragarmes zur Anbindung an den Gegenstand dient, auf den die Unterstützungskraft aufgebracht werden soll.

Bei Gegenständen, die eine Schließstellung und eine Offenstellung haben, ist gemäß einer Ausführungsform der Kraftunterstützungsvorrichtung der Tragarm um seine Schwenkachse zwischen einer ersten Stellung, die der Schließstellung des Gegenstands entspricht, und einer zweiten Stellung verschwenkbar, die der Offenstellung des Gegenstands entspricht. Vorzugsweise ist nur in der zweiten Stellung des Tragarmes, also in der Offenstellung des Gegenstandes, der Schwinghebel der Verstelleinrichtung von der Arretiereinrichtung freigegeben, um in diesem Zustand der Verstelleinrichtung ein Verschwenken des Schwinghebels und damit eine Anpassung an unterschiedlich schwere Lasten zu ermöglichen. Bei einer solchen Ausführungsform ist in allen Stellungen des Gegenstandes zwischen der Offenstellung bis zu und einschließlich der Schließstellung der Schwinghebel an der Stelle seines von der ersten Endstellung bis zur zweiten Endstellung reichenden Verschwenkbereiches arretiert, die der festgestellten Last entspricht, so dass eine der jeweils festgestellten Last angepasste Unterstützungskraft aufgebracht wird.

Gemäß einer besonders bevorzugten Weiterbildung der zuvor beschriebenen Ausführungsform fluchtet in der zweiten Stellung des Tragarmes, vorzugsweise unterstützt durch die Anlage eines am Tragarm befestigten Betätigungs- und/oder Zentrierbolzens in einer Zentriermulde der Lagerplatte, die Schwenkachse des an dem Tragarm angebrachten einen Endes der Gasdruckfeder mit der Schwenkachse des schwenkbar an der Lagerplatte angebrachten Endes des Schwinghebels. Auf diese Weise ist verhindert, dass beim Entriegeln des Schwinghebels aus der arretierten Stellung ein Drehmoment von dem Gegenstand, der zur Aufbringung der Unterstützungskraft mit dem Tragarm verbunden ist, auf den Schwinghebel ausgeübt werden kann. Der Schwinghebel bleibt somit trotz der aufgehobenen Arretierung zunächst in seiner bestehenden Stellung. Diese Stellung ändert sich erst, wenn eine sich ändernde Last über die Verstelleinrichtung dem Schwinghebel mitgeteilt wird.

In einer Ausführungsform der erfindungsgemäßen Kraftunterstützungsvorrichtung weist die Arretiereinrichtung eine am freien Ende des Schwinghebels angebrachte Rastklaue auf, die mit einer kreissegmentförmigen Verzahnung zusammenwirkt. Vorzugsweise ist bei dieser Ausführungsform die Rastklaue drehbar am Ende des Schwinghebels angebracht und federnd in Richtung eines Eingriffs mit der kreissegmentförmigen Verzahnung vorgespannt. Die Arretierung muss also aktiv aufgehoben werden, eine Tatsache, die unter Sicherheitsaspekten als vorteilhaft angesehen wird, da die Kraftunterstützungsvorrichtung so bei einem Defekt ihre arretierte Stellung beibehält. Zum Aufheben der Arretierung ist gemäß einer Ausführungsform die Rastklaue mit einem Schalthebel verbunden, der in der zweiten Stellung des Tragarmes, vorzugsweise von dem daran befestigten Betätigungs- und Zentrierbolzen, derart betätigt wird, dass die Rastklaue aus ihrem Eingriff mit der Verzahnung freikommt. Vorzugsweise ist der Schalthebel am festgelegten Ende des Schwinghebels schwenkbar angebracht und die Schwenkbewegung des Schalthebels wird über ein Seil oder ein Gestänge auf die Rastklaue übertragen. Zur Betätigung des Schalthebels weist der Tragarm gemäß einer Ausführungsform wenigstens einen zuvor bereits erwähnten Betätigungs- und Zentrierbolzen auf, der in der zweiten Stellung des Tragarmes den Schalthebel betätigt. Alternativ ist die die Unterstützungskraft erzeugende Gasfeder mit einer Kappe versehen, die in der zweiten Stellung des Tragarmes den Schalthebel betätigt. Die bereits angesprochene kreissegmentförmige Verzahnung ist bei diesen Ausführungsformen vorzugsweise über eine kreissegmentförmige Brücke mit der Lagerplatte verbunden und die Lagerplatte ist zur Justierung der genannten Betätigungsstellung schwenkbar an der Tragstruktur angebracht. Vorzugsweise ist dabei die Lagerplatte um die Achse schwenkbar, um die auch der Tragarm schwenkt.

Bei der eingangs erwähnten, rein mechanischen Ausführung der erfindungsgemäßen Kraftunterstützungsvorrichtung wirkt bei einem bevorzugten Ausführungsbeispiel auf den Schwinghebel eine Vorspannkraft, die einer von der Verstelleinrichtung bei einer Lastzunahme auf den Schwinghebel ausgeübten Kraft entgegengerichtet ist und die derart bemessen ist, dass sie den Schwinghebel im lastfreien Zustand in seine erste Endstellung drückt. Bei diesem Ausführungsbeispiel ist demnach die erste Endstellung die Stellung, die der Schwinghebel einnimmt, wenn von der mit der Verstelleinrichtung zusammenwirkenden Lastermittlungseinrichtung keine Last festgestellt wird. Die zweite Endstellung des Schwinghebels ist dann die Stellung, die der Schwinghebel einnimmt, wenn die maximale Unterstützungskraft der Kraftunterstützungsvorrichtung wirken soll. Dazu kommt es, wenn die Lastermittlungseinrichtung das Vorhandensein einer entsprechend großen Last feststellt.

Bei bevorzugten Ausführungsformen der erfindungsgemäßen Kraftunterstützungsvorrichtung ist die Verstellbewegung des Schwinghebels gedämpft. Damit wird ein unkontrolliertes Schwingen des Schwinghebels nach seiner Entriegelung und bei einem Verstellvorgang verhindert.

Gemäß einer bevorzugten Ausführungsform der rein mechanischen Realisierung der erfindungsgemäßen Kraftunterstützungsvorrichtung wird die auf den Schwinghebel wirkende Vorspannkraft durch eine Dämpfer-Gasfedereinheit erzeugt, die zugleich die zuvor angesprochene Dämpfung der Schwinghebelbewegung bewirkt. Eine solche Ausführungsform ist kompakt, kostengünstig und zuverlässig.

Gemäß einer anderen bevorzugten Ausführungsform wird die auf den Schwinghebel wirkende Vorspannkraft durch wenigstens eine Zugfeder erzeugt, deren eines Ende an der Lagerplatte und deren anderes Ende am Schwinghebel festgelegt ist.

Bei einer Ausführungsform der rein mechanischen erfindungsgemäßen Kraftunterstützungsvorrichtung weist die Lastermittlungseinrichtung eine schwenkbare Wägeplatte auf, die zur Aufnahme einer Last bestimmt ist und die ihre in Abhängigkeit der Größe der Last ausgeführte Schwenkbewegung mittels einer Übertragungseinrichtung auf den Schwinghebel überträgt. Diese Übertragungseinrichtung kann beispielsweise ein Seil oder ein Gestänge sein. Bei einer solchen Ausführungsform wird demnach eine veränderte Lastgröße durch eine entsprechende Schwenkbewegung der Wägeplatte unmittelbar an den Schwinghebel weitergegeben, der sich daraufhin - bei entriegelter Arretiereinrichtung - in eine der neuen Lastgröße entsprechende Stellung verstellt.

Bei einer alternativen Ausführungsform einer erfindungsgemäßen Kraftunterstützungsvorrichtung, die nicht vollständig mechanisch zu sein braucht, weist die Lastermittlungseinrichtung ebenfalls eine Wägeplatte auf, die zur Aufnahme einer Last bestimmt ist, wobei diese Wägeplatte jedoch im Gegensatz zur zuvor beschriebenen Ausführungsform auf mehreren Lastsensoren gelagert ist, um die Lastgröße zu bestimmen, und wobei ferner die ermittelte Lastgröße einem Steller gemeldet wird, der den Schwinghebel entsprechend der ermittelten Lastgröße zwischen seiner ersten Endstellung und seiner zweiten Endstellung verstellt. Vorzugsweise umfasst dieser Steller einen Elektromotor, der über einen selbsthemmenden Spindeltrieb eine Verstellbewegung auf den Schwinghebel ausüben kann. Wenn der Spindeltrieb selbsthemmend ausgeführt ist, kann auch die im Zusammenhang mit der rein mechanischen Ausführung der Kraftunterstützungsvorrichtung beschriebene Kombination aus Rastklaue und Verzahnung entfallen, der selbsthemmende Spindeltrieb stellt dann die Arretiereinrichtung für den Schwinghebel dar. Da bei dieser Ausführungsform die Lastermittelung mechanisch von der Verstelleinrichtung entkoppelt ist, braucht keine Dämpfung der Verstellbewegung des Schwinghebels vorgesehen zu werden. Auch fällt die schwenkbare Anlenkung der Wägeplatte weg, stattdessen ist die Wägeplatte schwimmend auf den Lastsensoren (beispielsweise auf vier Lastsensoren) gelagert. Dies ist z.B. dann ein Vorteil, wenn die Wägeplatte sich am Boden eines Behälters, beispielsweise eines Gepäckfaches, befindet, weil die Gefahr eines Verklemmens der schwenkbar angelenkten Wägeplatte entfällt.

Die erfindungsgemäße Kraftunterstützungsvorrichtung kann überall dort zur Anwendung kommen, wo Lasten vorwiegend durch manuelle Kräfte aus einer Stellung in eine andere Stellung zu bewegen sind und maximal vorgeschriebene oder zumutbare Betätigungskräfte nicht überschritten werden sollen. Im Folgenden werden zwei bevorzugte Ausführungsbeispiele einer erfindungsgemäßen Kraftunterstützungsvorrichtung in Verbindung mit einem absenkbaren Überkopf-Gepäckfach in einer Passagierkabine eines Flugzeuges anhand der beigefügten, schematischen Zeichnungen näher beschrieben. Es zeigt:
- Figur 1: eine Seitenansicht einer der besseren Übersichtlichkeit wegen teilweise demontierten Kraftunterstützungsvorrichtung für ein absenkbares Überkopf-Gepäckfach in einem Flugzeug,
- Figur 2: eine räumliche Ansicht von wesentlichen Teilen der Kraftunterstützungsvorrichtung aus Figur 1,
- Figur 3: die Kraftunterstützungsvorrichtung aus Figur 1 mit einem leeren Gepäckfach in vollständig abgesenkter, d.h. geöffneter Stellung,
- Figur 4: die Kraftunterstützungsvorrichtung aus Figur 1 mit dem leeren Gepäckfach aus Figur 3 in nicht abgesenkter, d.h. geschlossener Stellung,
- Figur 5: die Kraftunterstützungsvorrichtung aus Figur 1 mit einem maximal beladenen Gepäckfach in vollständig abgesenkter, d.h. offener Stellung,
- Figur 6: die Kraftunterstützungsvorrichtung aus Figur 1 mit einem maximal beladenen Gepäckfach in nicht abgesenkter, d.h. geschlossener Stellung,
- Figur 7: eine Seitenansicht eines abgewandelten Ausführungsbeispiels einer Kraftunterstützungsvorrichtung für ein absenkbares Überkopf-Gepäckfach in einem Flugzeug, wobei das Gepäckfach leer ist und sich in vollständig abgesenkter, d.h. geöffneter Stellung befindet,
- Figur 8: die Kraftunterstützungsvorrichtung aus Figur 7 mit dem leeren Gepäckfach in nicht abgesenkter, d.h. geschlossener Stellung,
- Figur 9: die Kraftunterstützungsvorrichtung aus Figur 7 mit einem maximal beladenen Gepäckfach in vollständig abgesenkter, d.h. offener Stellung, und
- Figur 10: die Kraftunterstützungsvorrichtung aus Figur 7 mit einem maximal beladenen Gepäckfach in nicht abgesenkter, d.h. geschlossener Stellung.

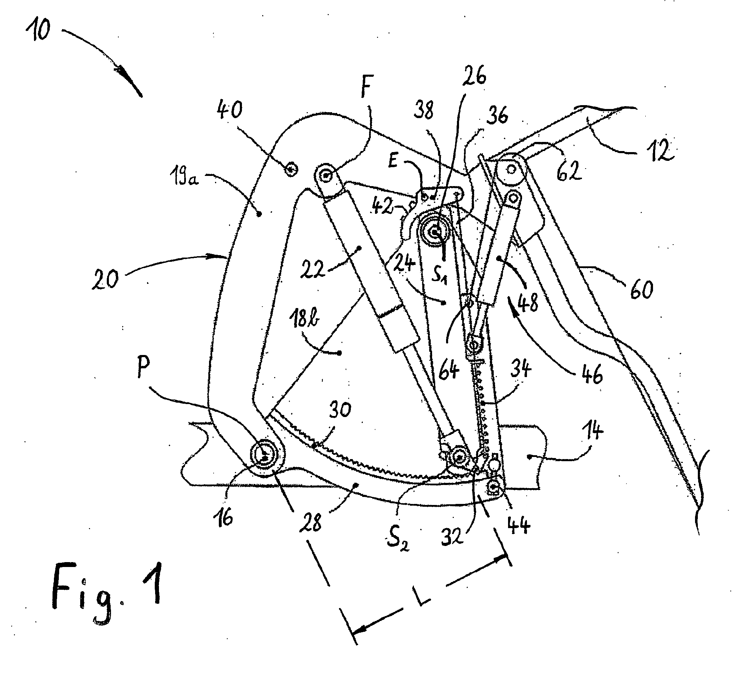

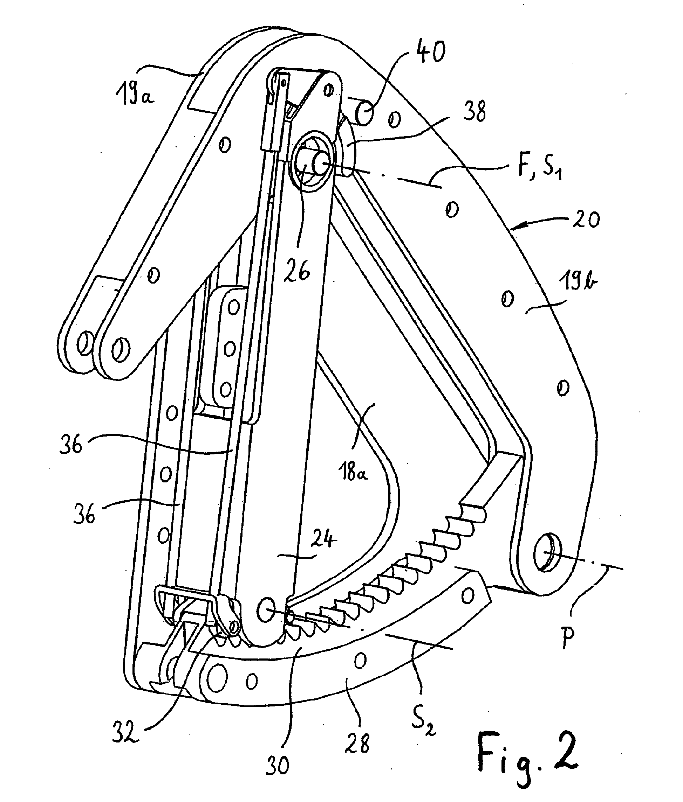

Die Figur 1 zeigt in einer Seitenansicht eine allgemein mit 10 bezeichnete Kraftunterstützungsvorrichtung zur Bereitstellung einer lastabhängigen Unterstützungskraft für ein nur teilweise dargestelltes, absenkbares Überkopf-Gepäckfach 12 in einem Flugzeug. Figur 2 zeigt wesentliche Teile der Kraftunterstützungsvorrichtung 10 zum besseren Verständnis in einer räumlichen Darstellung.

Die Kraftunterstützungsvorrichtung 10 ist an einer Tragstruktur befestigt, die hier durch eine Traverse 14 eines ansonsten nicht weiter dargestellten Flugzeugrumpfes gebildet ist. Die Befestigung der Kraftunterstützungsvorrichtung 10 an der Traverse 14 erfolgt mittels eines Bolzens 16, an dem zum einen zwei Lagerplatten 18a, 18b und zum anderen das eine Ende eines Tragarmes 20 angelenkt sind. Der Bolzen 16 legt eine Achse P fest, um die die Lagerplatten 18a, 18b und insbesondere der Tragarm 20 schwenkbar sind.

Der hier aus zwei voneinander beabstandeten Platten 19a, 19b gebildete Tragarm 20 hat ein bumerangförmiges Aussehen und ist mit seinem anderen Ende an der Rückseite des Gepäckfaches 12 befestigt. Etwa in der Mitte des Tragarmes 20, d.h. im Bereich der Spitze der durch die angenäherte V-Form gebildeten Gestalt des Tragarmes 20, ist ein Ende einer Gasdruckfeder 22, die zur Bereitstellung der von der Kraftunterstützungsvorrichtung 10 aufzubringenden Unterstützungskraft dient, an einer Schwenkachse F schwenkbar angelenkt. Das andere Ende der Gasdruckfeder 22 ist schwenkbar an dem einen, in Figur 1 unteren Ende eines Schwinghebels 24 angelenkt, dessen anderes, in Figur 1 oberes Ende auf einem von der Lagerplatte 18 hervorstehenden und eine Schwenkachse S₁ definierenden Lagerzapfen 26 drehbar gelagert ist. Im gezeigten Ausführungsbeispiel hat der Schwinghebel 24 einen U-förmigen Querschnitt (siehe Fig. 2).

Wie aus Figur 1 ersichtlich, haben die Lagerplatten 18a, 18b die äußere Form eines Kreissektors, an dessen radial äußerem Rand eine Brücke 28 eine Verbindung zwischen den beiden Lagerplatten 18a, 18b gleicher Gestalt und Größe herstellt. Die Lagerplatte 18a ist in Uberdeckung mit der Lagerplatte 18b angeordnet und deshalb in Figur 1 nicht dargestellt, um eine bessere Erkennbarkeit der einzelnen Bauteile der Kraftunterstützungsvorrichtung 10 zu ermöglichen. Die in Figur 1 dargestellte hintere Lagerplatte 18b bildet zusammen mit der in Fig. 1 nicht gezeigten vorderen Lagerplatte 18a und der Brücke 28 eine Art Gehäuse, in dem die gesamte Kinematik der Kraftunterstützungsvorrichtung 10 aufgenommen ist.

Zur Variierung der von der Kraftunterstützungsvorrichtung 10 auf das Gepäckfach 12 übertragenen Unterstützungskraft kann der Schwinghebel 24 innerhalb des von der Kreissektorform der Lagerplatten 18a, 18b definierten Winkelbereiches, der hier etwa 45 Grad beträgt, um den Lagerzapfen 26 und damit um die Schwenkachse S₁ zwischen einer ersten Endstellung, in der die Kraftunterstützungsvorrichtung 10 keine oder nahezu keine Unterstützungskraft ausübt, und einer zweiten Endstellung verschwenkt werden, in der die Kraftunterstützungsvorrichtung 10 ihre maximale Unterstützungskraft abgibt. Diese zweite Endstellung des Schwinghebels 24 ist in Figur 1 dargestellt. In dieser Stellung ist ein Hebelarm L zwischen der Achse P und einer durch die schwenkbare Anbringung des unteren Endes der Gasdruckfeder 22 festgelegten Drehachse S₂ maximal, so dass die von der Gasdruckfeder 22 erzeugte Kraft ihre größte Wirkung auf den Tragarm 20 hat. Die erste Endstellung des Schwinghebels 24 befindet sich in Fig. 1 am im Uhrzeigersinn gegenüberliegenden Rand der Lagerplatten 18a, 18b. In dieser ersten Endstellung befinden sich die Drehpunkte der Achsen P und S₂ sowie der Drehpunkt F des oberen Endes der Gasdruckfeder 22 annähernd auf einer Linie, d.h. der Hebelarm L ist Null oder nahezu Null, so dass in dieser ersten Endstellung praktisch kein Unterstützungsmoment von der Gasdruckfeder 22 auf den Tragarm 20 ausgeübt wird.

Um den Schwinghebel 24 an einer Vielzahl von Stellen zwischen seiner ersten Endstellung und seiner zweiten Endstellung festsetzen zu können, ist eine Arretiereinrichtung vorhanden. Diese Arretiereinrichtung besteht im Wesentlichen aus einer auf der Brücke 28 angeordneten kreissegmentförmigen Verzahnung 30 und einer am freien Ende des Schwinghebels 24 drehbar angebrachten Rastklaue 32, die mittels einer sich am Schwinghebel 24 abstützenden Druckfeder 34 in Eingriff mit der Verzahnung 30 vorgespannt ist. Im gezeigten Ausführungsbeispiel ist die Rastklaue 32 um die Achse S₂ drehbar. Die Anzahl der Zwischenstellungen, an denen der Schwinghebel 24 mittels der Arretiereinrichtung festsetzbar ist, lässt sich durch eine geeignete Ausführung der Verzahnung 30 mit mehr oder weniger Zähnen in einem weiten Bereich entsprechend den zu erfüllenden Anforderungen oder Wünschen einstellen. Selbstverständlich kann der Schwinghebel 24 mittels der Arretierungseinrichtung auch in seinen beiden Endstellungen arretiert werden.

Um das Gepäckfach 12 öffnen und schließen zu können, ist der Tragarm 20 um die Achse P zwischen einer ersten Stellung, die der Schließstellung des Gepäckfaches 12 entspricht und die in Figur 1 wiedergegeben ist, und einer zweiten Stellung verschwenkbar, die einer Offenstellung des Gepäckfaches 12 entspricht. Während des Verschwenkvorganges des Tragarms 20 zwischen den beiden genannten Stellungen wird in Abhängigkeit der Stellung des Schwinghebels 24 ein entsprechendes Unterstützungsmoment von der Gasdruckfeder 22 auf den Tragarm 20 und damit auf das Gepäckfach 12 ausgeübt.

Bei dem gezeigten Ausführungsbeispiel soll eine Verstellung des Schwinghebels 24 nur in der Offenstellung des Gepäckfaches 12, also in der zweiten Stellung des Tragarmes 20 möglich sein. Wie bereits erwähnt, ist die Rastklaue 32 federnd zum Eingriff mit der Verzahnung 30 vorgespannt, d.h. der Schwinghebel 24 ist normalerweise arretiert. Um in der Offenstellung des Gepäckfaches 12 eine Verstellung des Schwinghebels 24 zu ermöglichen, muss dessen Arretierung aufgehoben werden. Hierzu ist ein in Figur 1 rechtes Ende der Rastklaue 32 über ein Gestänge 36 mit dem einen Ende eines Schalthebels 38 verbunden, der am in Figur 1 oberen Ende des Schwinghebels 24 um eine Achse E schwenkbar angeordnet ist. Das dem einen Ende, an dem das Gestänge 36 befestigt ist, gegenüberliegende Ende des Schalthebels 38 ist bogenförmig ausgeführt und zum Zusammenwirken mit einem Betätigungs- und Zentrierbolzen 40 bestimmt, der in der Nähe des Anlenkungspunktes der Gasdruckfeder 22 am Tragarm 20 befestigt ist. Dieser Betätigungs- und Zentrierbolzen 40, der im gezeigten Ausführungsbeispiel jeweils auf der Außenseite der Platten 19a, 19b, also auf beiden Außenseiten des Tragarmes 20 vorhanden ist, ruht in der zweiten Stellung des Tragarmes 20, d.h. in der Offenstellung des Gepäckfaches 12, in einer an jeder Lagerplatte 18a, 18b ausgebildeten Zentriermulde 42 und drückt dabei auf den bogenförmigen Arm des Schalthebels 38, wodurch dieser gegen den Uhrzeigersinn um die Achse E verschwenkt wird. Diese Verschwenkbewegung des Schalthebels 38 wird über das Gestänge 36 auf die Rastklaue 32 übertragen, welche dadurch zwangsweise aus ihrem Eingriff mit der Verzahnung 30 gezogen wird.

In dieser zweiten Stellung des Tragarmes 20 fluchtet die Schwenkachse F des an dem Tragarm angebrachten Endes der Gasdruckfeder 22 mit der Schwenkachse S₁ des Schwinghebels 24. Auf diese Weise kann dann, wenn die Arretierung des Schwinghebels 24 wie zuvor beschrieben aufgehoben wird, kein von dem Gepäckfach 12 über den Tragarm 20 auf den Schwinghebel 24 ausgeübtes Drehmoment mehr wirken. Eine plötzliche, unerwünschte Bewegung des Schwinghebels 24 nach seinem Freikommen aus der Arretierung ist somit verhindert.

Aus der vorstehenden Beschreibung ist ersichtlich, dass die Arretierung des Schwinghebels 24 beim gezeigten Ausführungsbeispiel erst dann gelöst werden soll, wenn der Tragarm 20 sich tatsächlich in seiner zweiten Stellung befindet, das Gepäckfach 12 also vollständig geöffnet ist. Um dies sicherzustellen, kann die Lagerplatte 18 mittels einer Einstellschraube 44 begrenzt um die Achse P verdreht werden. Bei offenem Gepäckfach 12 kann so die Kraftunterstützungsvorrichtung 10 derart justiert werden, dass der Betätigungs- und Zentrierbolzen 40 sich genau in der Zentriermulde 42 befindet.

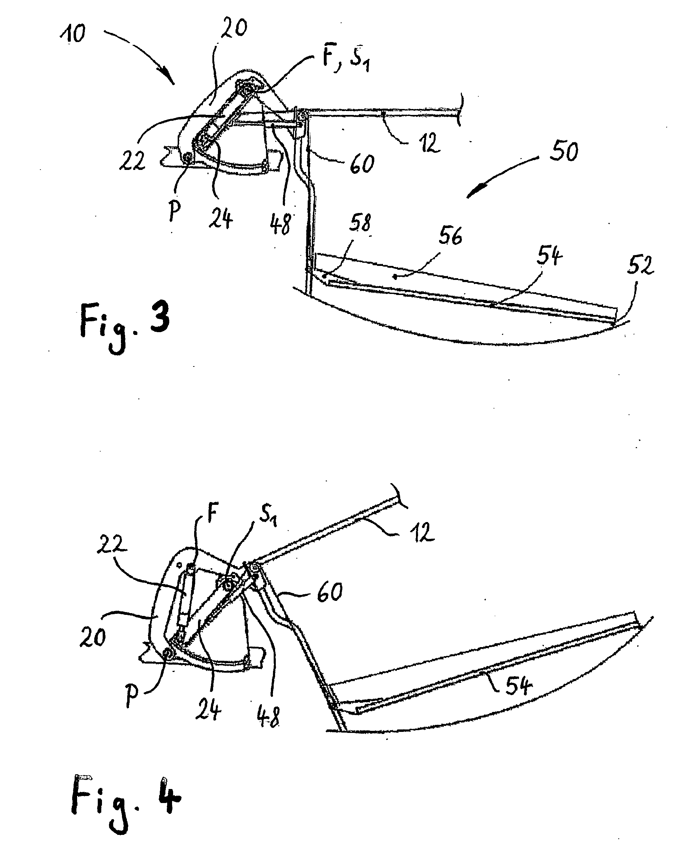

Im Folgenden wird unter zusätzlicher Bezugnahme auf die Figuren 3 bis 6 die lastabhängige Verstellung der Kraftunterstützungsvorrichtung 10 näher erläutert. Wie bereits erwähnt, variiert die von der Kraftunterstützungsvorrichtung 10 bereitgestellte Unterstützungskraft in Abhängigkeit der Stellung des Schwinghebels 24. Zum Verschwenken des Schwinghebels 24 ist eine allgemein mit 46 bezeichnete Verstelleinrichtung vorhanden, zu der eine Dämpfer-Gasfedereinheit 48 gehört, deren eines Ende mit dem Schwinghebel 24 und deren anderes Ende mit dem am Gepäckfach 12 befestigten Ende des Tragarmes 20 schwenkbar verbunden ist. In erster Linie dient diese Gasfedereinheit 48 dazu, eine Vorspannkraft auf den Schwinghebel 24 auszuüben, die den Schwinghebel 24 im lastfreien Zustand in seine erste Endstellung drückt, in der die von der Kraftunterstützungsvorrichtung 10 bereitgestellte Unterstützungskraft ihren Minimalwert annimmt. In zweiter Linie dient die Gasfedereinheit 48 dazu, jegliche Verschwenkbewegung des Schwinghebels 24 zu dämpfen, um ein unerwünschtes "Schlagen" des Schwinghebels 24 zu vermeiden. Im gezeigten Ausführungsbeispiel sind diese beiden Funktionen - Bereitstellung einer Vorspannkraft auf den Schwinghebel und Dämpfung der Verschwenkbewegung des Schwinghebels - in der Dämpfer-Gasfedereinheit 48 zusammengefasst, jedoch können diese Funktionen auch in konstruktiv getrennter Weise durch separate Bauteile ausgeübt werden.

Die Verstelleinrichtung 46 arbeitet zum Ermitteln des Maßes einer notwendigen Verstellung des Schwinghebels 24 mit einer Lastermittlungseinrichtung 50 zusammen. Die Lastermittlungseinrichtung 50 umfasst eine am vorderen Rand des Bodens des Gepäckfaches 12 bei 52 schwenkbar angelenkte Wägeplatte 54 mit seitlichen Begrenzungen 56. Am gegenüberliegenden, hinteren Rand der Wägeplatte 54 befindet sich ein Halter 58, der mit einer Übertragungseinrichtung in Gestalt eines Seilzuges 60 verbunden ist, welcher am oberen Rand des Gepäckfaches 12 über eine Umlenkrolle 62 geführt und an einem Auge 64 mit dem Schwinghebel 24 verbunden ist. Auf diese Weise wird die Schwenkbewegung, die die Wägeplatte 54 in Abhängigkeit des auf ihr abgelegten Gewichts um die bei 52 befindliche Schwenkachse ausführt, auf den Schwinghebel 24 übertragen. Dabei ist die über den Seilzug 60 auf den Schwinghebel 24 wirkende Kraft der Vorspannkraft entgegengerichtet, die von der Gasfedereinheit 48 auf den Schwinghebel 24 ausgeübt wird. Im Betrieb der Kraftunterstützungsvorrichtung 10 stellt sich daher bei entarretiertem Schwinghebel 24 an Letzterem ein Kräftegleichgewicht zwischen der von der Gasfedereinheit 48 ausgeübten Vorspannkraft und der über den Seilzug 60 auf den Schwinghebel 24 wirkenden Gewichtskraft der Last ein, die sich auf der Wägeplatte 54 befindet. Mit zunehmender Last wird sich daher die Gleichgewichtsstellung des Schwinghebels 24 ausgehend von seiner ersten Endstellung immer weiter in Richtung auf seine zweite Endstellung verlagern, bis schließlich mit der höchstzulässigen Last die zweite Endstellung erreicht wird.

Zum besseren Verständnis zeigen die Figuren 3 bis 6 das Gepäckfach 12 in geöffneter und geschlossener Stellung, einmal ohne Last und einmal mit höchstzulässiger Last.

Figur 3 zeigt das Gepäckfach 12 in geöffneter, d.h. vollständig abgesenkter Stellung. Der Tragarm 20 befindet sich somit in seiner zweiten Stellung. Auf der Wägeplatte 54 ist keine Last vorhanden, der Schwinghebel 24 befindet sich deshalb in seiner ersten Endstellung, in der beim vorliegenden Ausführungsbeispiel keine oder allenfalls eine sehr geringe Unterstützungskraft bereitgestellt wird.

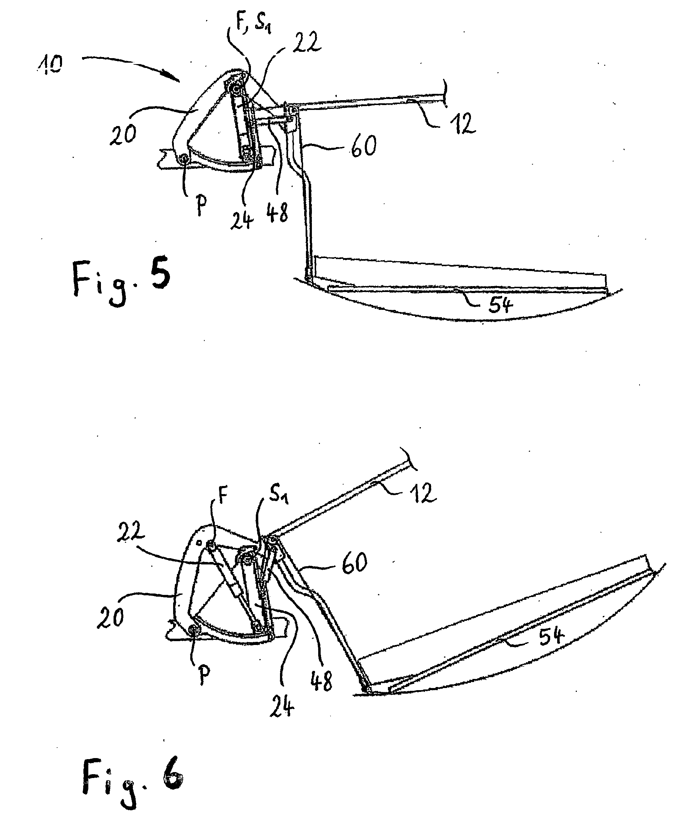

Figur 4 zeigt das Gepäckfach 12 aus Figur 3 in seiner Schließstellung. Der Tragarm 20 nimmt seine erste Stellung ein, während die Stellung des Schwinghebels 24 in der Stellung - hier der ersten Endstellung - arretiert ist, die sich bei geöffnetem Gepäckfach 12 gemäß Figur 3 eingestellt hatte.

Figur 5 zeigt das Gepäckfach 12 wiederum in seiner Offenstellung, d.h. der Tragarm 20 befindet sich wieder in seiner zweiten Stellung, allerdings liegt auf der Wägeplatte 54 nunmehr die höchstzulässige Last (nicht dargestellt). Die Wägeplatte 54 ist gegenüber dem in Figur 3 wiedergegebenen Zustand nach unten verschwenkt und diese Schwenkbewegung hat den Schwinghebel 24 in seine zweite Endstellung bewegt.

In Figur 6 ist das voll beladene Gepäckfach 12 aus Figur 5 in seiner Schließstellung wiedergegeben, in der der Tragarm 20 seine erste Stellung einnimmt, während der Schwinghebel 24 in der Stellung - hier in seiner zweiten Endstellung - arretiert ist, die sich bei offenem Gepäckfach 12 gemäß Figur 5 eingestellt hat.

In den Figuren 3 bis 6 sind die möglichen Extremsituationen dargestellt worden. Es versteht sich, dass der Schwinghebel 24 in Abhängigkeit der sich auf der Wägeplatte 54 befindenden Last auch jede zwischen seinen beiden Endstellungen gelegene Stellung einnehmen kann.

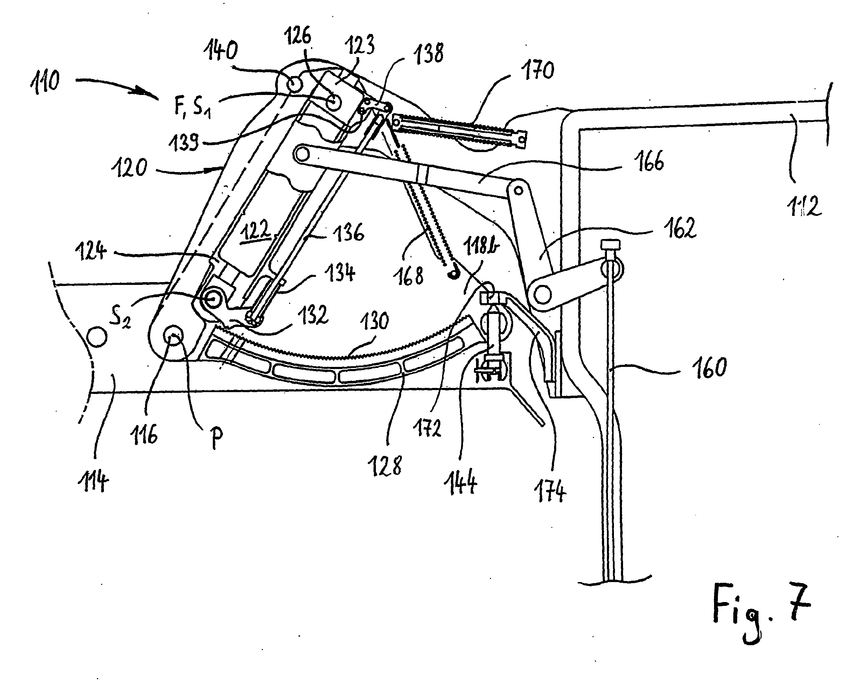

In den Figuren 7 bis 10 ist ein zweites Ausführungsbeispiel einer Kraftunterstützungsvorrichtung 110 zur Bereitstellung einer lastabhängigen Unterstützungskraft für ein absenkbares Überkopf-Gepäckfach 112 für mehrere Beladungszustände und Stellungen des Gepäckfachs 112 dargestellt. Mit dem in den Figuren 1 bis 6 dargestellten Ausführungsbeispiel funktionsgleiche Teile tragen das entsprechende, jedoch um 100 erhöhte Bezugszeichen des ersten Ausführungsbeispiels. Der grundsätzliche konstruktive Aufbau und seine Funktion entsprechen dem ersten Ausführungsbeispiel, weshalb im Folgenden lediglich die zum ersten Ausführungsbeispiel vorhandenen Unterschiede in Konstruktion und Funktion erläutert werden.

Gegenüber dem ersten Ausführungsbeispiel der Kraftunterstützungsvorrichtung 10 weist das zweite Ausführungsbeispiel 110 eine verringerte Einbauhöhe und ein verringertes Gewicht auf. Zur Verringerung der Einbauhöhe ist die Schwenkachse F etwas nach unten verlegt und die Gasdruckfeder 122 mit einer Kappe 123 versehen worden, während die Befestigungsstelle des Schalthebels 138 bezogen auf die Figuren etwas nach rechts verlegt worden ist. So kann die Kappe 123 den Schalthebel 138 betätigen. Der Betätigungs- und Zentrierbolzen 40 des ersten Ausführungsbeispiels wird deshalb im zweiten Ausführungsbeispiel zu einem reinen Zentrierbolzen 140, der nur noch die Aufgabe hat, in der vollständig abgesenkten, d.h. geöffneten Stellung des Gepäckfaches 112 die Schwenkachsen F und S₁ zur Deckung zu bringen.

Diese fluchtende Anordnung der beiden Schwenkachsen F und S₁ ist dann erreicht, wenn die auf beiden Seiten des Tragarmes 120 vorhandenen Zentrierbolzen 140 in den Zentriermulden 142 der Lagerplatten 118a, 118b aufgenommen sind. Zur Minimierung der Reibung und um einen glatten, ruckfreien Bewegungsablauf zu ermöglichen, ist das mit der Kappe 123 in Kontakt kommende Ende des Schalthebels 138 mit einer Rolle 139 versehen.

Anstelle des Seils 60 überträgt bei dem zweiten Ausführungsbeispiel ein Gestänge 160 die Bewegung der Wägeplatte 154 auf einen Umlenkhebel 162, der wiederum über ein Zuggestänge 166 mit einem Auge 164 an dem Schwinghebel 124 angelenkt ist.

Statt der Dämpfer-Gasfedereinheit 48 sind zwei Zugfedern 168 vorhanden, von denen in den Figuren 7 bis 10 nur eine dargestellt ist. Ihr eines, in den Figuren unteres Ende ist an der Lagerplatte 118b festgelegt, während ihr entgegengesetztes anderes Ende am Schwinghebel 124 befestigt ist. Die andere Zugfeder 168 ist mit ihrem einen Ende an der Lagerplatte 118a und mit ihrem anderen Ende ebenfalls am Schwinghebel 124 befestigt. Zwischen den oberen Befestigungspunkten der beiden Zugfedern 168 und der Schwenkachse S₁ existiert ein Hebelarm, so dass die Kraft der beiden Zugfedern 168 den Schwinghebel 124 im lastfreien Zustand in die im Zusammenhang mit den Figuren 1 bis 6 beschriebene erste Endstellung vorspannt. Ein Dämpfer ist beim zweiten Ausführungsbeispiel nicht vorgesehen, stattdessen sind die Zahnform der Verzahnung 130 und der Rastklaue 132 so gestaltet, dass ein leichtes und sicheres Ver- und Entriegeln des Schwinghebels 124 bei einer Betätigung des Schalthebels 138 erfolgt.

Schließlich weist das zweite Ausführungsbeispiel noch zwei als Übertotpunktfedern ausgeführte Unterstützungsfedern 170 auf, von denen in den Figuren 7 bis 10 nur eine dargestellt ist. Das eine Ende dieser Unterstützungsfedern 170 ist schwenkbar an der Lagerplatte 118a bzw. 118b angebracht, während ihr entgegengesetztes anderes Ende an der Platte 119a bzw. 119b des Tragarms 120 angelenkt ist. Mittels dieser Unterstützungsfedern 170 wird einerseits die Kraftunterstützung kurz vor dem Schließen des Gepäckfachs 112 erhöht, was das endgültige Schließen des Gepäckfachs 112 erleichtert. Andererseits üben die Unterstützungsfedern 170 im geöffneten Zustand des Gepäckfachs 112 eine Kraft aus, die insbesondere ein leeres Gepäckfach 112 sicher in der geöffneten Stellung hält und ein Schwingen des geöffneten Gepäckfachs verhindert.

Die Einstellschraube 144, die wie beim ersten Ausführungsbeispiel zur Justierung der Offenstellung des Gepäckfachs 112 dient, kann beim zweiten Ausführungsbeispiel zusätzlich als Transportsicherung Verwendung finden. Hierzu wird sie bei geöffnetem Gepäckfach 112 in eine Gewindebohrung 172 eines Arms 174 geschraubt, der am Gepäckfach 112 befestigt ist. So kann die Einheit aus Kraftunterstützungsvorrichtung 110 und Gepäckfach 112 gut transportiert werden, beispielsweise vom Hersteller des Gepäckfachs zum Flugzeugwerk.
Figur 7 zeigt das Gepäckfach 112 ohne Beladung in geöffneter Stellung. Der Schwinghebel 124 befindet sich in seiner ersten Endstellung, die Rastklaue 132 ist wie ersichtlich aus der Verzahnung 130 gelöst.

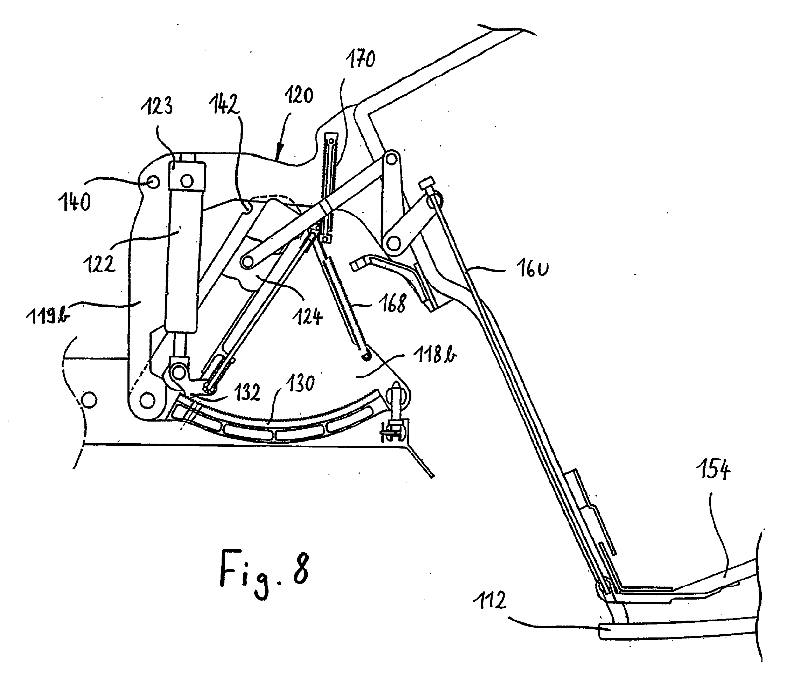

Figur 8 zeigt das leere Gepäckfach 112 aus Figur 7 in seiner Schließstellung. Die Rastklaue 132 ist mit der Verzahnung 130 in Eingriff und arretiert den Schwinghebel 124 in seiner ersten Endstellung.

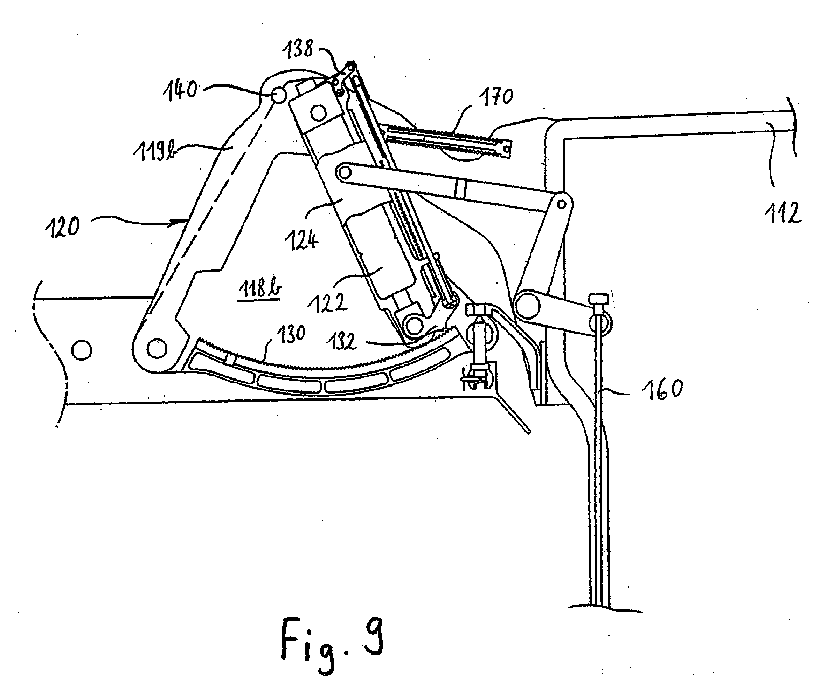

Figur 9 zeigt im Unterschied zu den Figuren 7 und 8 ein maximal beladenes Gepäckfach 112 in geöffneter Stellung. Die Rastklaue 132 ist aus der Verzahnung 130 herausgehoben und der Schwinghebel 124 ist in seine zweite Endstellung bewegt worden.

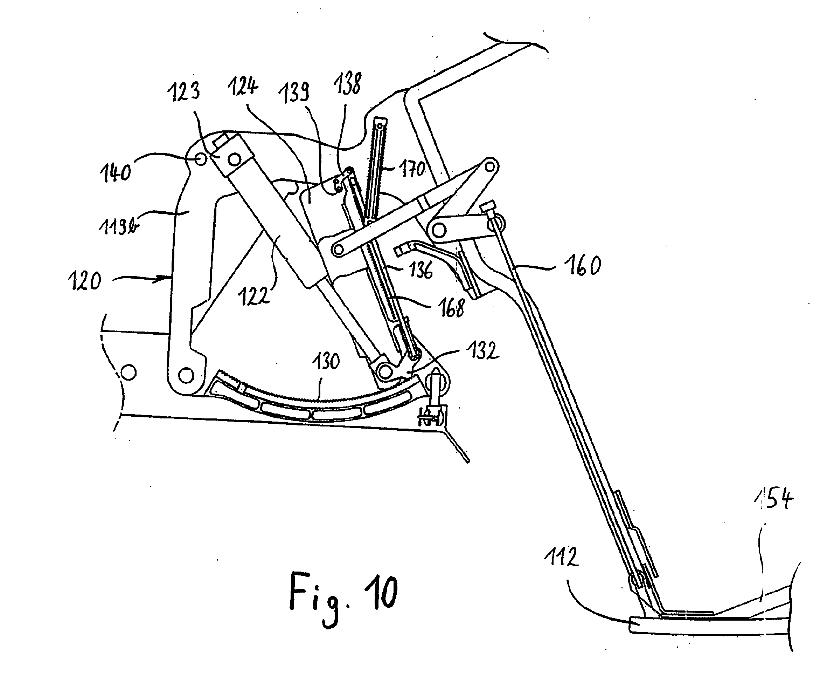

Figur 10 zeigt das maximal beladene Gepäckfach 112 in seiner Schließstellung. Der Schwinghebel 124 ist dabei mittels der Rastklaue 132 und der Verzahnung 130 in seiner zweiten Endstellung arretiert.

## Patentansprüche

1. Kraftunterstützungsvorrichtung (10; 110) zur Bereitstellung einer lastabhängigen Unterstützungskraft, insbesondere für ein absenkbares Überkopf-Gepäckfach (12; 112) in einem Flugzeug, mit
- einem Tragarm (20; 120), dessen eines Ende an einer Tragstruktur um eine Achse (P) schwenkbar angebracht ist und dessen anderes Ende zur Verbindung mit einem Gegenstand ausgestaltet ist, auf den die Unterstützungskraft aufgebracht werden soll,
- einer Gasdruckfeder (22; 122), deren eines Ende schwenkbar an dem Tragarm (20; 120) und deren anderes Ende schwenkbar an einem Ende eines Schwinghebels (24; 124) angelenkt ist, dessen anderes Ende schwenkbar an wenigstens einer Lagerplatte (18a, 18b; 118a, 118b) angebracht und der bezüglich der Lagerplatte (18a, 18b; 118a, 118b) zwischen einer ersten Endstellung und einer zweiten Endstellung verschwenkbar ist,
- einer Arretiereinrichtung zum Arretieren des Schwinghebels (24; 124) an einer Mehrzahl von Stellen in dem Bereich von seiner ersten Endstellung zur zweiten Endstellung, und
- einer Verstelleinrichtung (46; 146) zum Verschwenken des Schwinghebels (24; 124) zwischen seiner ersten Endstellung und seiner zweiten Endstellung in Abhängigkeit einer von einer mit der Verstelleinrichtung (46; 146) zusammenwirkenden Lastermittlungseinrichtung (50; 150) ermittelten Last.

2. Kraftunterstützungsvorrichtung nach Anspruch 1,
**dadurch gekennzeichnet, dass** der Tragarm (20; 120) um die Achse (P) zwischen einer ersten Stellung, die einer Schließstellung des Gegenstands entspricht, auf den die Unterstützungskraft aufgebracht werden soll, und einer zweiten Stellung verschwenkbar ist, die einer Offenstellung des Gegenstands entspricht, auf den die Unterstützungskraft aufgebracht werden soll, und dass nur in der zweiten Stellung des Tragarmes (20; 120) die Arretiereinrichtung den Schwinghebel (24; 124) freigibt, um der Verstelleinrichtung (46; 146) ein Verschwenken des Schwinghebels (24; 124) zu ermöglichen.

3. Kraftunterstützungsvorrichtung nach Anspruch 2,
**dadurch gekennzeichnet, dass** in der zweiten Stellung des Tragarmes (20; 120) eine Schwenkachse (F) des an dem Tragarm (20; 120) angebrachten einen Endes der Gasdruckfeder (22; 122) mit einer Schwenkachse (S₁) des schwenkbar an der Lagerplatte (18a, 18b; 118a, 118b) angebrachten Endes des Schwinghebels (24; 124) fluchtet.

4. Kraftunterstütrungsvorrichtung nach einem der vorhergehenden Ansprüche,
**dadurch gekennzeichnet, dass** die Arretiereinrichtung eine am freien Ende des Schwinghebels (24; 124) angebrachte Rastklaue (32; 132) aufweist, die mit einer kreissegmentförmigen Verzahnung (30; 130) zusammenwirkt.

5. Kraftunterstützungsvorrichtung nach Anspruch 4,
**dadurch gekennzeichnet, dass** die Rastklaue (32; 132) drehbar am Ende des Schwinghebels (24; 124) angebracht und federnd in Richtung eines Eingriffs mit der kreissegmentförmigen Verzahnung (30; 130) vorgespannt ist.

6. Kraftunterstützungsvorrichtung nach Anspruch 5,
**dadurch gekennzeichnet, dass** die Rastklaue (32; 132) mit einem Schalthebel (38; 138) verbunden ist, der in der zweiten Stellung des Tragarmes (20; 120) derart betätigt wird, dass die Rastklaue (32; 132) aus ihrem Eingriff mit der Verzahnung (30; 130) freikommt.

7. Kraftunterstützungsvorrichtung nach Anspruch 6,
**dadurch gekennzeichnet, dass** der Schalthebel (38; 138) am festgelegten Ende des Schwinghebels (24; 124) schwenkbar angebracht ist und dass seine Schwenkbewegung über ein Seil oder ein Gestänge (36; 136) auf die Rastklaue (32; 132) übertragen wird.

8. Kraftunterstützungsvorrichtung nach Anspruch 6 oder 7,
**dadurch gekennzeichnet, dass** der Tragarm (20) wenigstens einen Betätigungs- und Zentrierbolzen (40) aufweist, der in der zweiten Stellung des Tragarmes (20) den Schalthebel (38) betätigt, dass die kreissegmentförmige Verzahnung (30) mit der Lagerplatte (18a, 18b) verbunden ist, und dass die Lagerplatte (18a, 18b) zur Justierung dieser Betätigungsstellung schwenkbar an der Tragstruktur angebracht ist.

9. Kraftunterstützungsvorrichtung nach Anspruch 6 oder 7,
**dadurch gekennzeichnet, dass** die Gasdruckfeder (122) eine Kappe (123) aufweist, die in der in der zweiten Stellung des Tragarmes (120) den Schalthebel (138) betätigt, dass die kreissegmentförmige Verzahnung (130) mit der Lagerplatte (118a, 118b) verbunden ist, und dass die Lagerplatte (118a, 118b) zur Justierung dieser Betätigungsstellung schwenkbar an der Tragstruktur angebracht ist.

10. Kraftunterstützungsvorrichtung nach Anspruch 8 oder 9,
**dadurch gekennzeichnet, dass** die Lagerplatte (18a, 18b; 118a, 118b) um die Achse (P) schwenkbar ist.

11. Kraftunterstützungsvorrichtung nach einem der vorhergehenden Ansprüche,
**dadurch gekennzeichnet, dass** auf den Schwinghebel (24; 124) eine Vorspannkraft wirkt, die einer von der Verstelleinrichtung (46; 146) bei einer Lastzunahme auf den Schwinghebel (24; 124) ausgeübten Kraft entgegengerichtet ist und die im lastfreien Zustand den Schwinghebel (24; 124) in seine erste Endstellung drückt.

12. Kraftunterstützungsvorrichtung nach einem der vorhergehenden Ansprüche,
**dadurch gekennzeichnet, dass** die Verstellbewegung des Schwinghebels (24) gedämpft ist.

13. Kraftunterstützungsvorrichtung nach Anspruch 11 und 12,
**dadurch gekennzeichnet, dass** die auf den Schwinghebel (24) wirkende Vorspannkraft und die Dämpfung der Schwinghebelbewegung durch eine Dämpfer-Gasfedereinheit (48) erzeugt bzw. bewirkt werden.

14. Kraftunterstützungsvorrichtung nach Anspruch 11,
**dadurch gekennzeichnet, dass** die auf den Schwinghebel (124) wirkende Vorspannkraft durch wenigstens eine Zugfeder (168) erzeugt wird, deren eines Ende an der Lagerplatte (118a, 118b) und deren anderes Ende am Schwinghebel (124) festgelegt ist.

15. Kraftunterstützungsvorrichtung nach einem der vorhergehenden Ansprüche,
**dadurch gekennzeichnet, dass** die Lastermittlungseinrichtung (50; 150) eine schwenkbare Wägeplatte (54; 154) aufweist, die zur Aufnahme einer Last bestimmt ist und die ihre in Abhängigkeit der Größe der Last ausgeführte Schwenkbewegung mittels einer Übertragungseinrichtung auf den Schwinghebel (24; 124) überträgt.

16. Kraftunterstützungsvorrichtung nach Anspruch 15,
**dadurch gekennzeichnet, dass** die Übertragungseinrichtung ein Seilzug (60) oder ein Gestänge (160) ist.

17. Kraftunterstützungsvorrichtung nach einem der Ansprüche 1 bis 3,
**dadurch gekennzeichnet, dass** die Lastermittlungseinrichtung eine Wägeplatte aufweist, die zur Aufnahme einer Last bestimmt und die zur Bestimmung der Lastgröße auf mehreren Lastsensoren gelagert ist, und dass die ermittelte Lastgröße einem Steller gemeldet wird, der den Schwinghebel (24; 124) entsprechend der ermittelten Lastgröße zwischen seiner ersten Endstellung und seiner zweiten Endstellung verstellt.

18. Kraftunterstützungsvorrichtung nach Anspruch 17,
**dadurch gekennzeichnet, dass** der Steller einen Elektromotor umfasst, der über einen selbsthemmenden Spindeltrieb eine Verstellbewegung auf den Schwinghebel (24; 124) ausüben kann.

19. Kraftunterstützungsvorrichtung nach einem der vorhergehenden Ansprüche,
**dadurch gekennzeichnet, dass** der Gegenstand, auf den die Unterstützungskraft aufgebracht werden soll, ein absenkbares Überkopf-Gepäckfach (12; 112) in einem Flugzeug ist.

20. Kraftunterstützungsvorrichtung nach Anspruch 19 in Verbindung mit Anspruch 15 oder 17,
**dadurch gekennzeichnet, dass** die Wägeplatte (54; 154) im Bodenbereich des Überkopf-Gepäckfaches (12; 112) angeordnet ist.

## Claims

1. Force supporting device (10; 110) for providing a load-dependent supporting force, in particular for a lowerable overhead locker (12; 112) in an aircraft, comprising
- a bracket (20; 120), whose one end is attached to a supporting structure so as to be pivotal about an axis (P) and whose other end is configured for connection to an object to which the supporting force is to be applied,
- a gas-filled spring (22; 122), whose one end is pivotally articulated to the bracket (20; 120) and whose other end is pivotally articulated to one end of an oscillating lever (24; 124) the other end of which is pivotally attached to at least one bearing plate (18a, 18b; 118a, 118b) and which is adapted to pivot relative to the bearing plate (18a, 18b; 118a, 118b) between a first end position and a second end position,
- an arresting device for arresting the oscillating lever (24; 124) at a plurality of positions in the region of its first end position to the second end position, and
- a displacing device (46; 146) for pivoting the oscillating lever (24; 124) between its first end position and its second end position as a function of a load determined by a load determining device (50; 150) interacting with the displacing device (46; 146).

2. Force supporting device according to claim 1,
**characterised in that** the bracket (20; 120) can be pivoted about the axis (P) between a first position, which corresponds to a closed position of the object to which the supporting force should be applied, and a second position, which corresponds to an open position of the object to which the supporting force is to be applied, and **in that** the arresting device releases the oscillating lever (24; 124) only in the second position of the bracket (20; 120) to allow the displacing device (46; 146) to pivot the oscillating lever (24; 124).

3. Force supporting device according to claim 2,
**characterised in that** in the second position of the bracket (20; 120) a swivelling axis (F) of the one end of the gas-filled spring (22; 122) attached to the bracket (20; 120) is in alignment with a swivelling axis (S₁) of the end of the oscillating lever (24; 124) pivotally attached to the bearing plate (18a, 18b; 118a, 118b).

4. Force supporting device according to one of the preceding claims,
**characterised in that** the arresting device comprises a latching claw (32; 132), attached to the free end of the oscillating lever (24; 124), which interacts with a segment of a circle-shaped toothing (30; 130).

5. Force supporting device according to claim 4,
**characterised in that** the latching claw (32; 132) is rotatably attached to the end of the oscillating lever (24; 124) and is resiliently pre-tensioned in the direction of an engagement with the segment of a circle-shaped toothing (30; 130).

6. Force supporting device according to claim 5,
**characterised in that** the latching claw (32; 132) is connected to a release lever (38; 138) which is actuated in the second position of the bracket (20; 120) in such a way that the latching claw (32; 132) comes clear from its engagement with the toothing (30; 130).

7. Force supporting device according to claim 6,
**characterised in that** the release lever (38; 138) is pivotally attached to the fixed end of the oscillating lever (24; 124), and **in that** its pivotal movement is transmitted to the latching claw (32; 132) by a cable or a rod assembly (36; 136).

8. Force supporting device according to claim 6 or 7,
**characterised in that** the bracket (20) comprises at least one actuating and centring pin (40) which actuates the release lever (38) in the second position of the bracket (20), **in that** the segment of a circle-shaped toothing (30) is connected to the bearing plate (18a, 18b), and **in that** the bearing plate (18a, 18b) is pivotally attached to the supporting structure for adjustment of this actuating position.

9. Force supporting device according to claim 6 or 7,
**characterised in that** the gas-filled spring (122) comprises a cap (123) which actuates the release lever (138) in the second position of the bracket (120), **in that** the segment of a circle-shaped toothing (130) is connected to the bearing plate (118a, 118b), and **in that** the bearing plate (118a, 118b) is pivotally attached to the supporting structure for adjustment of this actuating position.

10. Force supporting device according to claim 8 or 9,
**characterised in that** the bearing plate (18a, 18b; 118a, 118b) is pivotal about the axis (P).

11. Force supporting device according to one of the preceding claims,
**characterised in that** a pre-tensioning force acts on the oscillating lever (24; 124) which acts in the opposite direction to a force exerted on the oscillating lever (24; 124) by the displacing device (46; 146) in the event of an increase in load and which presses the oscillating lever (24; 124) into its first end position in the load-free state.

12. Force supporting device according to one of the preceding claims,
**characterised in that** the displacement movement of the oscillating lever (24) is damped.

13. Force supporting device according to claims 11 and 12,
**characterised in that** the pre-tensioning force acting on the oscillating lever (24) and the damping of the oscillating lever movement are generated or brought about by a damper gas spring unit (48).

14. Force supporting device according to claim 11,
**characterised in that** the pre-tensioning force acting on the oscillating lever (124) is generated by at least one tension spring (168) whose one end is fixed to the bearing plate (118a, 118b) and whose other end is fixed to the oscillating lever (124).

15. Force supporting device according to one of the preceding claims,
**characterised in that** the load determining device (50; 150) comprises a pivotal weighing plate (54; 154) which is intended to absorb a load and transmits its pivotal movement, executed as a function of the magnitude of the load, to the oscillating lever (24; 124) by means of a transmitting device.

16. Force supporting device according to claim 15,
**characterised in that** the transmitting device is a Bowden cable (60) or a rod assembly (160).

17. Force supporting device according to one of claims 1 to 3,
**characterised in that** the load determining device comprises a weighing plate which is intended to absorb a load and is mounted on a plurality of load sensors to determine the magnitude of the load, and **in that** the determined load magnitude is reported to an actuator which displaces the oscillating lever (24; 124) between its first end position and its second end position in response to the determined load magnitude.

18. Force supporting device according to claim 17,
**characterised in that** the actuator comprises an electric motor that is adapted to exert a displacement movement on the oscillating lever (24; 124) via a self-locking spindle drive.

19. Force supporting device according to one of the preceding claims,
**characterised in that** the object to which the supporting force is to be applied is a lowerable overhead locker (12; 112) in an aircraft.

20. Force supporting device according to claim 19 in connection with claim 15 or 17,
**characterised in that** the weighing plate (54; 154) is arranged in the base region of the overhead locker (12; 112).

## Revendications

1. Système d'assistance de force (10 ; 110) à assistance de force asservie à la charge, notamment pour un compartiment à bagages abaissable (12 ; 112) monté au plafond d'un avion, comprenant
- un bras-support (20 ; 120), une extrémité dudit bras-support étant montée sur une structure de support de manière à pouvoir pivoter autour d'un axe (P) et l'autre extrémité étant conçue pour être reliée à un objet sur lequel la force d'assistance est appelée à être appliquée,
- un ressort à pression de gaz (22 ; 122), dont une extrémité est montée articulée sur le bras-support (20 ; 120) de manière à pouvoir pivoter et l'autre extrémité est montée articulée à une extrémité d'un levier pivotant (24 ; 124) de manière à pouvoir pivoter, l'autre extrémité du levier pivotant étant montée pivotante sur au moins une plaque de palier (18a, 18b ; 118a, 118b) et le levier pivotant pouvant pivoter entre une première et une deuxième position finales,
- un dispositif d'arrêt pour arrêter le levier pivotant (24 ; 124) à plusieurs endroits situés dans la zone comprise entre la première et la deuxième position finales dudit levier, et
- un dispositif de réglage (46 ; 146) pour faire pivoter le levier pivotant (24 ; 124) entre sa première et sa deuxième position finales en fonction d'une charge déterminée au moyen d'un dispositif de détermination de charge (50 ; 150) coopérant avec ledit dispositif de réglage (46 ; 146).

2. Système d'assistance de force selon la revendication 1,
**caractérisé en ce que** le bras-support (20 ; 120) peut pivoter autour de l'axe (P) entre une première position correspondant à une position de fermeture de l'objet, sur lequel la force d'assistance est appelée à être appliquée, et une deuxième position correspondant à une position d'ouverture de l'objet, sur lequel la force d'assistance est appelée à être appliquée, et **en ce que** le dispositif d'arrêt libère le levier pivotant (24 ; 124) uniquement dans la deuxième position du bras-support (20 ; 120) pour permettre au dispositif de réglage (46 ; 146) de faire pivoter le levier pivotant (24 ; 124).

3. Système d'assistance de force selon la revendication 2,
**caractérisé en ce que**, dans la deuxième position du bras-support (20 ; 120), un axe de pivotement (F) de l'extrémité du ressort à pression de gaz (22 ; 122) montée sur le bras-support (20 ; 120) est aligné avec un axe de pivotement (S₁) de l'extrémité du levier pivotant (24 ; 124) montée pivotante sur la plaque de palier (18a, 18b ; 118a, 118b).

4. Système d'assistance de force selon l'une des revendications précédentes,
**caractérisé en ce que** le dispositif d'arrêt présente une dent d'arrêt (32 ; 132) qui est montée à l'extrémité libre du levier pivotant (24 ; 124) et coopère avec une denture en forme de segment de cercle (30 ; 130).

5. Système d'assistance de force selon la revendication 4,
**caractérisé en ce que** la dent d'arrêt (32 ; 132) est montée à rotation à l'extrémité du levier pivotant (24 ; 124) et est précontrainte par ressort dans la direction d'un engrènement dans la denture en forme de segment de cercle (30 ; 130).

6. Système d'assistance de force selon la revendication 5,
**caractérisé en ce que** la dent d'arrêt (32 ; 132) est reliée à un levier de commande (38 ; 138) qui, dans la seconde position du bras-support (20 ; 120), est actionné de telle sorte que la dent d'arrêt (32 ; 132) est libérée de son engrènement dans la denture (30 ; 130).

7. Système d'assistance de force selon la revendication 6,
**caractérisé en ce que** le levier de commande (38 ; 138) est monté à l'extrémité déterminée du levier pivotant (24 ; 124) de manière à pouvoir pivoter et que son mouvement pivotant est transmis par l'intermédiaire d'un câble ou d'une tringle (36 ; 136) sur la dent d'arrêt (32 ; 132).

8. Système d'assistance de force selon la revendication 6 ou 7,
**caractérisé en ce que** le bras-support (20) présente au moins un boulon d'actionnement et de centrage (40), lequel actionne le levier de commande (38) lorsque le bras-support (20) se trouve dans sa deuxième position, que la denture (130) en forme de segment de cercle est reliée à la plaque de palier (18a, 18b) et que la plaque de palier (18a, 18b) est montée sur la structure de support de manière à pouvoir pivoter, pour l'ajustage de cette position d'actionnement.

9. Système d'assistance de force selon la revendication 6 ou 7, **caractérisé en ce que** le ressort à pression de gaz (122) présente un capuchon (123) qui, lorsque le bras-support (120) se trouve dans la seconde position, actionne le levier de commande (138), que la denture (130) en forme de segment de cercle est reliée à la plaque de palier (118a, 118b) et que la plaque de palier (118a, 118b) est montée sur la structure de support de manière à pouvoir pivoter pour l'ajustage de cette position d'actionnement.

10. Système d'assistance de force selon la revendication 8 ou 9, **caractérisé en ce que** la plaque de palier (18a, 18b ; 118a, 118b) peut pivoter autour de l'axe (P).

11. Système d'assistance de force selon l'une des revendications précédentes,
**caractérisé en ce qu'**une force précontrainte agit sur le levier pivotant (24 ; 124), cette force précontrainte étant opposée à une force exercée par le dispositif de réglage (46 ; 146) sur le levier pivotant (24 ; 124) à la suite d'une augmentation de charge et pressant à l'état non chargé le levier pivotant (24 ; 124) dans sa première position finale.

12. Système d'assistance de force selon l'une des revendications précédentes,
**caractérisé en ce que** le mouvement de réglage du levier pivotant (24) est amorti.

13. Système d'assistance de force selon la revendication 11 et 12,
**caractérisé en ce que** la force précontrainte agissant sur le levier pivotant (24) et l'amortissement du mouvement du levier pivotant sont générés/induits par une unité d'amortissement à ressort à gaz (48).

14. Système d'assistance de force selon la revendication 11,
**caractérisé en ce que** la force de précontrainte agissant sur le levier pivotant (124) est produite par au moins un ressort de traction (168), dont une extrémité est fixée à la plaque de palier (118a, 118b) et l'autre extrémité est fixée au levier pivotant (124).

15. Système d'assistance de force selon l'une des revendications précédentes,
**caractérisé en ce que** le dispositif de détermination de la charge (50 ; 150) présente un plateau de pesée (54 ; 154), lequel est destiné à recevoir une charge et transmet à un levier pivotant (24 ; 124), par l'intermédiaire d'un dispositif de transmission, le mouvement pivotant exercé en fonction de la grandeur de la charge.

16. Système d'assistance de force selon la revendication 15,
**caractérisé en ce que** le dispositif de transmission consiste en un câble (60) ou une tringle (160).

17. Système d'assistance de force selon l'une des revendications 1 à 3,
**caractérisé en ce que** le dispositif de détermination de la charge présente un plateau de pesée, lequel est destiné à recevoir une charge et monté sur plusieurs capteurs de charge pour la détermination de la charge, et **en ce que** la grandeur de charge déterminée est transmise à un actionneur, lequel, en fonction de la grandeur de charge déterminée, règle le levier pivotant (24 ; 124) entre sa première et sa deuxième position finales.

18. Système d'assistance de force selon la revendication 17,
**caractérisé en ce que** l'actionneur comprend un électromoteur qui permet qu'un mouvement de réglage soit exercé sur le levier pivotant (24 ; 124) par l'intermédiaire d'un mécanisme à broche autobloquant.

19. Système d'assistance de force selon l'une des revendications précédentes,
**caractérisé en ce que** l'objet, sur lequel la force d'assistance est appelée à être appliquée, consiste en un compartiment à bagages abaissable (12 ; 112) monté au plafond d'un avion.

20. Système d'assistance de force selon la revendication 19,en liaison avec la revendication 15 ou 17,
**caractérisé en ce que** le plateau de pesée (54 ; 154) est disposé dans la partie inférieure du compartiment à bagages abaissable (12 ; 112) monté au plafond d'un avion.
